# EUROPEAN PATENT APPLICATION

(11) **EP 4 310 385 A1**
(43) Date of publication of application: **24.01.2024**
(21) Application number: 23185096.7
(22) Date of filing: 12.07.2023
(51) Int. Cl.: F17C 1/16, B64D 17/72

(54) **SUSTAINABLE COMPOSITE CYLINDER**

(30) Priority: 19.07.2022 US 202217867942
(71) Applicant: B/E Aerospace, Inc., Winston-Salem, NC 27105 (US)
(72) Inventor: PARKER, Lisa M., Raytown, MO, 64133 (US)
(74) Representative: Dehns

(57) **Abstract**

A composite cylinder assembly (300) may comprise a tube liner (302) including a first domed portion (304) defining a first liner neck (306), a second domed portion (308) defining a second liner neck (310), and a cylindrical wall (312). The cylinder assembly (300) may comprise at least one port. The port (401, 403) may comprise an outer diameter configured to fit into an inner diameter of a liner neck and a lip (404, 407) including an outer diameter that is greater than the inner diameter of the liner neck. The port may comprise a swage recess (406, 409) having an outer diameter that is less than the inner diameter of the liner neck and may be configured to press-fit into the liner neck. The lip may be configured to provide a surface area to weld the port to the liner neck. The swage recess may be configured to provide an area to swage the liner neck to the port.

## Description

### FIELD

The present disclosure relates to composite cylinder assemblies, and more specifically, sustainable composite cylinder assemblies incorporated into aerospace applications.

### BACKGROUND

Fiber wrapped reinforced metal lined high pressure composite gas cylinder assemblies incorporated into aerospace applications typically comprise seamless aluminum liners with relatively thick walls with significant variation in thickness. This renders the gas cylinder assemblies too large to be incorporated into space-constrained locations inside an aircraft such as passenger emergency breathing oxygen installed in the Passenger Service Unit ("PSU") in overhead portions of an aircraft cabin. Even if gas cylinder assemblies were small enough to be incorporated into PSUs, the small package size would likely be at the cost of projectile impact resistance, which is required for gas cylinder assemblies installed in the aircraft passenger cabin within the engine rotor burst zone. For example, aluminum-lined composite cylinders are prone to fragmentation when pressurized with pure oxygen. Moreover, gas cylinder assemblies installed in PSUs and other space-constrained locations are typically fully metallic, making them heavier than composite cylinders, which tends to decrease fuel economy.

### SUMMARY

A composite cylinder assembly is disclosed herein, in accordance with various embodiments. The composite cylinder assembly may comprise a tube liner. The tube liner may comprise a first domed portion. The first domed portion may define a first liner neck. The tube liner may further comprise a second domed portion. The second domed portion may define a second liner neck. The tube liner may further comprise a cylindrical wall coupled to the first domed portion and the second domed portion The cylindrical wall may be between the first domed portion and the second domed portion.

In various embodiments, the composite cylinder assembly may comprise a first port. The first port may comprise an outer diameter configured to fit into an inner diameter of the first liner neck. In various embodiments, the first port may comprise a first lip. The first lip may comprise an outer diameter that is greater than the inner diameter of the first liner neck. In various embodiments, the first port may comprise a first swage recess. The first swage recess may comprise an outer diameter that is less than the inner diameter of the first liner neck. In various embodiments, the first port may be configured to press-fit into the first liner neck. In various embodiments, the lip may be configured to provide a surface area to weld the first port to the first liner neck. In various embodiments, the swage recess may be configured to provide an area to swage the first liner neck to the first port.

In various embodiments, the composite cylinder assembly may further comprise a second port. The second port may comprise an outer diameter configured to fit into an inner diameter of the second liner neck. In various embodiments, the second port may further comprise a second lip. The second lip may comprise an outer diameter that is greater than the inner diameter of the second liner neck. In various embodiments, the second port may further comprise a second swage recess. The second swage recess may comprise an outer diameter that is less than the inner diameter of the second liner neck. In various embodiments, the second port may be configured to press-fit into the second liner neck. In various embodiments, the second lip may be configured to provide a surface area to weld the second port to the second liner neck. The second swage recess may be configured to provide an area to swage the second liner neck to the second port.

In various embodiments, the tube liner may comprise a carbon fiber overwrap. The carbon fiber overwrap may further comprise a glass fiber layer. In various embodiments, the tube liner may be made of metal. In various embodiments, the cylindrical wall of the tube liner may be seamed. In various embodiments, the tube liner may be spin welded. In various embodiments, each port may define a channel. The channel may be substantially cylindrical. The channel may be threaded.

In various embodiments, each liner neck may be stoppered at the port lip. In various embodiments, each liner neck may be spin welded to the port lip. In various embodiments, each liner neck may be fusion welded to the port lip.

A composite cylinder assembly is also disclosed herein. In various embodiments, the composite cylinder assembly may comprise a tube liner. The tube liner may comprise a domed head portion. The domed head portion may define a liner neck. The tube liner may further comprise an open bottom portion. The tube liner may comprise a cylindrical wall coupled to the domed head portion and the open bottom portion. The tube liner may be between the domed head portion and the open bottom portion.

In various embodiments, the composite cylinder assembly may comprise a mandrel port. In various embodiments, the mandrel port may comprise an outer diameter configured to fit into an inner diameter of the liner neck. The mandrel port may define a channel. The mandrel port may further comprise a mandrel. In various embodiments, the mandrel may comprise an outer diameter that is greater than the inner diameter of the liner neck. In various embodiments, the mandrel port may be configured to press-fit into the liner neck. In various embodiments, the mandrel port may be configured to be welded to the liner neck.

In various embodiments, the tube liner may further comprise a mandrel spindle. The mandrel spindle may be welded to the open bottom portion. The mandrel spindle may be configured to seal the open bottom portion. In various embodiments, the mandrel port may be a short mandrel port comprising a bisecting mandrel. In various embodiments, the mandrel port may be a long mandrel port comprising a terminal mandrel. In various embodiments, the mandrel may correspond to a convex contour of an inner surface of the domed head portion.

A method of manufacturing a composite cylinder assembly is also disclosed herein. In various embodiments, the method may comprise forming a tube liner. The tube liner may comprise a first domed portion. The first domed portion may define a liner neck. The tube liner may further comprise a second domed portion. The second domed portion may define a second liner neck. The tube liner may further comprise a cylindrical wall coupled to the first domed portion and the second domed portion. The cylindrical wall may be between the first domed portion and the second domed portion.

The method may further comprise fabricating a first port. The first port may comprise an outer diameter configured to fit into an inner diameter of the first liner neck. In various embodiments, the first port may comprise a first lip. The first lip may comprise an outer diameter that is greater than the inner diameter of the first liner neck. In various embodiments, the first port may comprise a first swage recess. The first swage recess may comprise an outer diameter that is less than the inner diameter of the first liner neck.

The method may further comprise press-fitting the first port into the first liner neck. The method may further comprise welding the first port to the first liner neck at the first lip. The method may further comprise swaging the first liner neck to the first port at the first swage recess.

In various embodiments, the method may further comprise fabricating a second port. The second port may comprise an outer diameter configured to fit into an inner diameter of the second liner neck. In various embodiments, the second port may further comprise a second lip. The second lip may comprise an outer diameter that is greater than the inner diameter of the second liner neck. In various embodiments, the second port may further comprise a second swage recess. The second swage recess may comprise an outer diameter that is less than the inner diameter of the second liner neck. In various embodiments, the method may comprise press-fitting the second port into the second liner neck. In various embodiments, the method may comprise welding the second port to the second liner neck at the second lip. In various embodiments, the method may comprise swaging the second liner neck to the second port at the second swage recess.

In various embodiments, the forming may comprise metal spinning the tube liner. In various embodiments, the forming may comprise deep drawing the first domed portion and the second domed portion. The forming may further comprise fusion welding the first domed portion to the second domed portion to form the cylindrical wall. The cylindrical wall may comprise a fusion weld line along a girth of the cylindrical wall.

### BRIEF DESCRIPTION OF THE DRAWINGS

FIG. 1A illustrates a view of a cabin of an aircraft, in accordance with various embodiments;
FIG. 1B illustrates a schematic view of emergency breathing oxygen cylinders in an aircraft, in accordance with various embodiments;
FIG. 2 illustrates an evacuation assembly slide in a deployed position, in accordance with various embodiments;
FIG. 3A illustrates a composite cylinder assembly, in accordance with various embodiments;
FIG. 3B illustrates a composite cylinder assembly, in accordance with various embodiments;
FIG. 3C illustrates a composite cylinder assembly, in accordance with various embodiments;
FIG. 4A illustrates a cross-section view of a port for a composite cylinder assembly, in accordance with various embodiments;
FIG. 4B illustrates a perspective view of a long mandrel port, in accordance with various embodiments;
FIG. 4C illustrates a perspective view of a short mandrel port, in accordance with various embodiments;
FIG. 5A illustrates a cross-section view of a dual neck composite cylinder assembly having a pair of ports fitting into a tube liner, in accordance with various embodiments;
FIG. 5B illustrates a cross-section view of a single neck composite cylinder assembly having a mandrel port into a tube liner, in accordance with various embodiments;
FIG. 6 illustrates a cross-section view of a dual neck composite cylinder assembly having a pair of mandrel fittings into a tube liner, in accordance with various embodiments;
FIG. 7A illustrates a perspective view of a mandrel spindle, in accordance with various embodiments;
FIG. 7B illustrates the mandrel spindle incorporated into a tube liner, in accordance with various embodiments; and
FIG. 8 illustrates a method of manufacturing a composite cylinder assembly, in accordance with various embodiments.

### DETAILED DESCRIPTION

The detailed description of exemplary embodiments herein makes reference to the accompanying drawings, which show exemplary embodiments by way of illustration. While these exemplary embodiments are described in sufficient detail to enable those skilled in the art to practice the disclosure, it should be understood that other embodiments may be realized and that logical changes and adaptations in design and construction may be made in accordance with this disclosure and the teachings herein. Thus, the detailed description herein is presented for purposes of illustration only and not of limitation. The scope of the disclosure is defined by the appended claims. For example, the steps recited in any of the method or process descriptions may be executed in any order and are not necessarily limited to the order presented. Furthermore, any reference to singular includes plural embodiments, and any reference to more than one component or step may include a singular embodiment or step. Also, any reference to attached, fixed, connected or the like may include permanent, removable, temporary, partial, full and/or any other possible attachment option. Additionally, any reference to without contact (or similar phrases) may also include reduced contact or minimal contact.

A composite cylinder, as disclosed herein, may be used to provide oxygen to aircraft passengers and crew. The composite cylinder may also be used to inflate aircraft evacuation systems, such as evacuation slides and life-raft assemblies. This disclosure is not limited in that regard. The composite cylinder disclosed herein may be advantageous over conventional seamless aluminum load-sharing liner composite cylinders in that the composite cylinder has a greater service life over conventional seamless aluminum load-sharing liner composite cylinders, reducing costs. Moreover, an increased service life and decreasing the number of re-inspections and re-tests decreases the likelihood of cylinder failure over the service life of an aircraft, PSU, or evacuation assembly, since the cylinders are more likely to be damaged during re-inspection and re-testing.

Composite cylinders approved to be installed and used in aircraft may be securely installed in locations in the aircraft where there is minimal or no threat of damage over its service life, which may be, for example, fifteen years. The service life of any cylinder, composite or otherwise, may be significantly less than the service life of the aircraft in which it is installed, which may be, for example, thirty years. Extending the service life of conventional seamless aluminum load-sharing liner composite cylinders to match that of the aircraft may be costly and time-consuming. Service life extension efforts increase carbon emissions due to removal, packaging, transport, and significant testing, which may be, for example, burst testing and drop testing.

Accordingly, removing a cylinder from an aircraft for re-inspection and re-testing poses a risk of damage to the cylinder several times over its service life. Re-inspection and re-testing involves removal of the cylinder from the aircraft, transporting the pressurized cylinder to the manufacturer, depleting the gas, removal of valve and/or regulator, visual inspection of the interior of the cylinder, filling with fluid, holding the cylinder to a test pressure (i.e., a minimum of 1.5 times the service pressure), depleting, cleaning and drying of the test fluid, reassembling the valve and/or regulator, refilling with gas, transporting back to the aircraft, and reinstalling the cylinder in the aircraft. In testing evacuation assembly cylinders, the entire inflatable evacuation assembly is at risk of damage since the assembly must be deployed (i.e., inflated), inspected, and then repackaged before reinstallation in the aircraft. Repackaging an evacuation assembly may be complex, difficult, and time-consuming, as it may require a crew of highly-trained personnel up to a week to complete. The composite cylinder disclosed herein may comprise a service life in excess of fifteen years and may enable an increase in time between re-inspection and re-test periods or eliminate re-inspection and re-test periods entirely. The composite cylinder may be optimized to fit into space-constrained locations in an aircraft, such as a PSU or evacuation assembly.

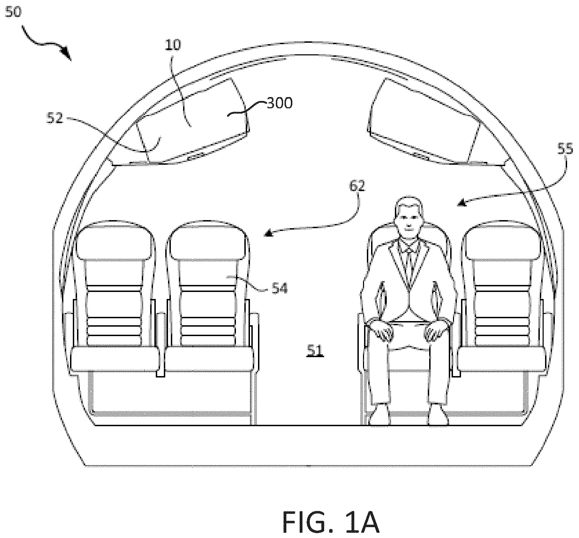

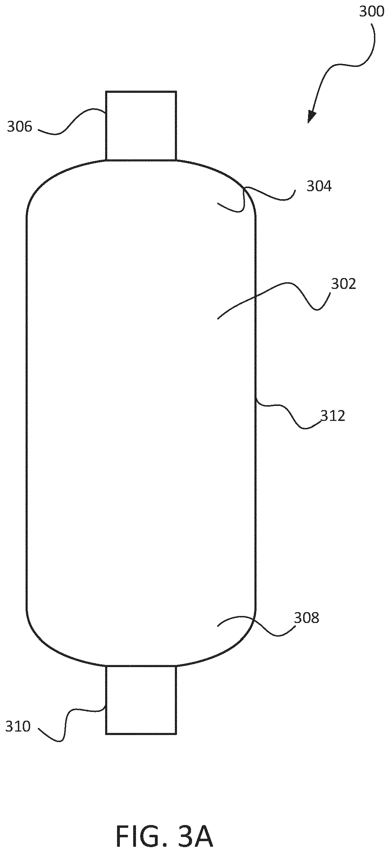

Referring to FIG. 1A, a cabin 51 of an aircraft 50 is shown, according to various embodiments. The aircraft 50 may be any aircraft such as an airplane, a helicopter, or any other aircraft. The aircraft 50 may include a passenger service unit (PSU) 10 corresponding to each row of seats 62. The PSU may be, for example, an emergency breathing oxygen PSU. The cabin 51 may include overhead bins 52, passenger seats 54 forming the row of passenger seats 62 for supporting passengers 55, etc. In various embodiments, the PSU 10 may be integral with the overhead bins 52 or the PSU 10 may be separate from the overhead bins 52. The present disclosure is not limited in this regard. In various embodiments, each PSU 10 may comprise a composite cylinder assembly 300 (FIG. 3A). The composite cylinder assembly 300 is configured to transfer a fluid (e.g., oxygen gas) to each passenger. Accordingly, the composite cylinder assembly 300 may be, for example, a gas cylinder.

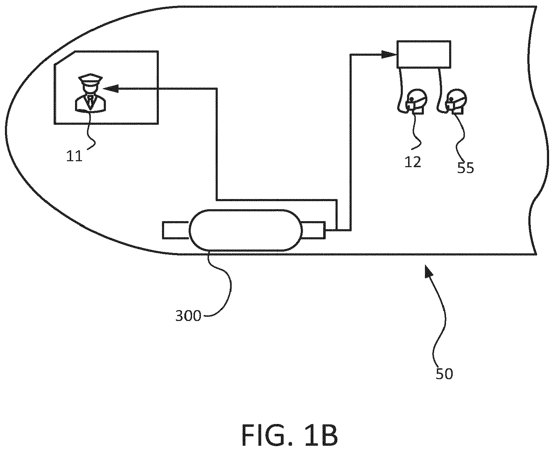

Referring to FIG. 1B, the aircraft 50 is shown in accordance with various embodiments. The aircraft 50 may include a system of composite cylinder assemblies 300 (FIG. 3A) located throughout the aircraft 50 and corresponding to the flight crew 11, flight attendants 12, and passengers 55. In various embodiments, the cylinders 300 (FIG. 3A) may be integral within a non-passenger-carrying area of the aircraft. The present disclosure in not limited in this regard. The cylinder 300 (Fig. 3A) may transfer a fluid (e.g., oxygen gas) to each crew member, flight attendant, and/or passenger.

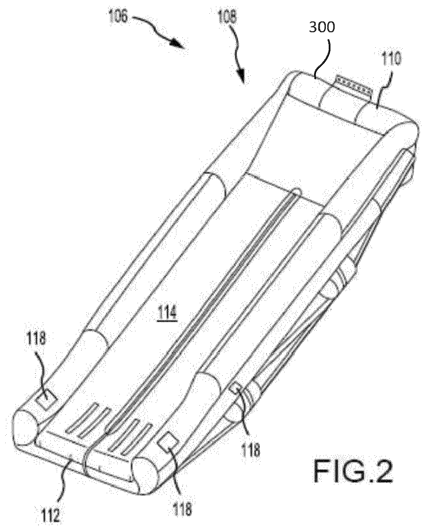

With reference to FIG. 2, an evacuation assembly 106 is illustrated with the evacuation slide 108 of the evacuation assembly 106 in an inflated or "deployed" position. In accordance with various embodiments, evacuation assembly 106 includes an evacuation slide 108. During deployment, evacuation slide 108 is inflated using pressurized gas from a compressed fluid source, such as, for example, a cylinder assembly 300 (FIG. 3A). Evacuation slide 108 may include a head end 110 and a toe 112 opposite head end 110. A sliding surface 114 of evacuation slide 108 extends from head end 110 to toe end 112. In various embodiments, one or more inflation sensor(s) 118 is/are operably coupled to evacuation slide 108. Inflation sensor(s) 118 may include pressure sensor(s) configured to measure a pressure of evacuation slide 108. In various embodiments, the cylinder assembly 300 may comprise compressed carbon dioxide or nitrogen, or combination thereof. In various embodiments, the cylinder assembly 300 may inflate various evacuation assemblies, such as, for example, evacuation life rafts. Aircraft evacuation assemblies comprising the cylinder assembly 300 may be installed in aircraft exit door compartments, the wings, the fuselage, or stored within the aircraft.

Referring to FIG. 3A, a composite cylinder assembly 300 is shown in accordance with various embodiments. In various embodiments, the composite cylinder assembly 300 may comprise a tube liner 302. As shown, the tube liner 302 may comprise a first domed portion 304. The first domed portion 304 may define a first liner neck 306. The tube liner 302 may further comprise a second domed portion 308. In various embodiments, the second domed portion 308 may define a second liner neck 310. The tube liner 302 may further comprise a cylindrical wall 312. The tube liner 302 of the composite cylinder assembly 300 may be configured to be any size suitable for portability and/or stowage in the aircraft. For example, in various embodiments, the tube liner 302 may define a volume of 0.25 liters to 0.5 liters (0.055 gallons (gal) to 0.11 gal), 0.5 liters to 0.75 liters (0.11 gal to 0.165 gal), 0.75 liters to 1 liter (0.165 gal to 0.22 gal), or 1 liter to 2 liters (0.22 gal to 0.44 gal), and the like. In various embodiments, the tube liner 302 may be greater than 2 liters (0.44 gal). For example, the tube liner 302 may be 2 liters to 15 liters (0.44 gal to 3.3 gal), 15 liters to 30 liters (3.3 gal to 6.6 gal), or 30 liters to 50 liters (6.6 gal to 11 gal).

The cylinder assembly 300 may comprise gaseous oxygen, which may replace chemically generated oxygen in the PSU, enabling an aircraft to fly for as much as 60 minutes more or longer to reach an altitude where emergency breathing oxygen is not required. While the composite cylinder assembly 300 shown in FIG. 3A is substantially cylindrical, it can be appreciated by those skilled in the art that the cylinder may be configured to any shape suitable for efficient stowage or placement in the PSU.

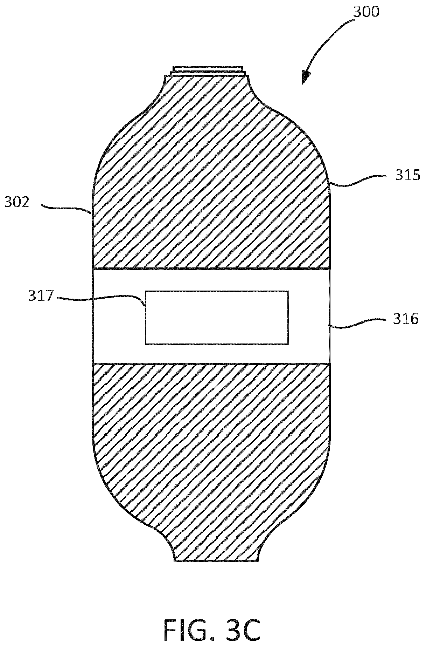

In various embodiments, the tube liner 302 may be made of steel, stainless steel, aluminum, aluminum alloys, brass, titanium, and the like. For cylinder assemblies housing oxygen and placed in the PSU, or in other engine rotor burst zone areas of the cabin of passenger aircraft, it may be advantageous to utilize a stainless-steel tube liner. Stainless-steel liners may be less prone to fragmentation or bursting upon contact with a projectile. Moreover, a stainless-steel liner may have a minimum burst pressure at least three times a service pressure. Stated differently, a stainless-steel liner may have a minimum burst pressure at least three times the pressure it is filled to before installation in the aircraft. As will be discussed further below in reference to FIG. 3C, stainless-steel liners may be fiber overwrapped cylinders (i.e., composite cylinders) pressurized with pure oxygen. Fiber overwrapped composite cylinders may be even less prone to fragmentation upon impact with a projectile.

In various embodiments, the tube liner 302 may be formed via metal spinning. Accordingly, the cylindrical wall 312 of the tube liner 302 may be seamed or seamless. In various embodiments, the tube liner 302 may be optionally exposed to an elevated temperature treatment to improve the mechanical properties of the tube liner 302. The elevated temperature treatment may be followed by a controlled cooling treatment to further improve the mechanical properties of the liner 302. In various embodiments, each of the first domed portion 304 and the second domed portion 308 may be spun into an open neck shape. Accordingly, the first domed portion 304 may define the first liner neck 306 and the second domed portion 308 may define the second liner neck 310. In various embodiments, the domed portions 304/308 and the liner necks 306/310 may be made of steel, stainless-steel, aluminum, aluminum alloy, brass, titanium, and the like.

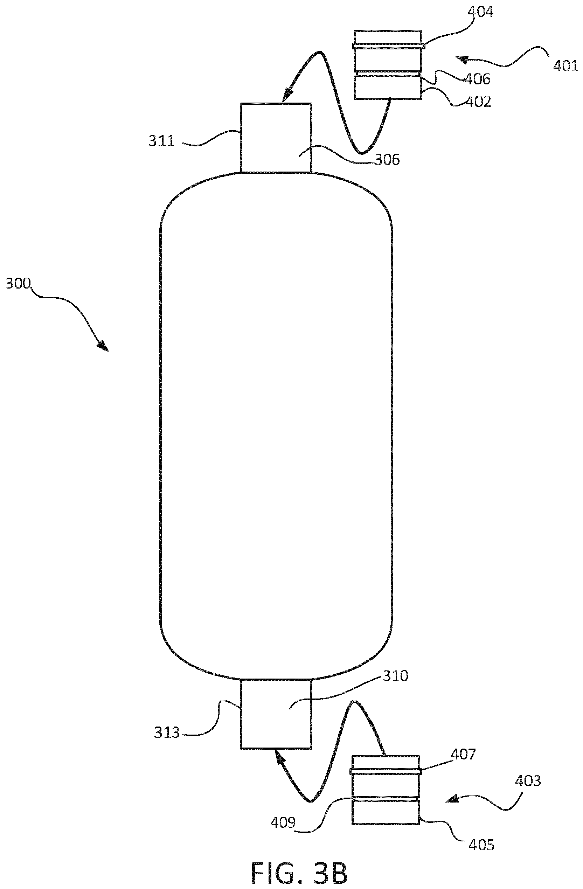

As shown in FIG. 3B, the cylinder assembly 300 may further comprise at least one port. As shown, the composite cylinder assembly may comprise a first port 401. In various embodiments, the first port 401 may comprise an outer diameter 402 configured to fit into an inner diameter 311 of the first liner neck 306. The first port 401 may further comprise a lip 404 and a swage recess 406. The lip 404 may comprise an outer diameter that is greater than the inner diameter 311 of the liner neck 306. This may enable depth control during swaging the first liner neck 306 to the first port 401. The lip 404 may be configured to stop the first liner neck 306 at the lip 404. Accordingly, the lip 404 may control the depth of the press fit. In various embodiments, the lip 404 may be configured to provide a surface area to weld the first port 401 to the first liner neck 306. In various embodiments, the first liner neck 306 may be configured to be spin welded to the lip 404. In various embodiments, the liner neck 306 may be configured to be fusion welded to the lip 404. The swage recess 406 may comprise an outer diameter that is less than the inner diameter 311 of the liner neck 306. This may provide an area to swage the first liner neck 306 to the first port 401. Accordingly, swaging the first liner neck 306 to the first port 401 helps retain the port 401 in case of a burst.

In further reference to FIG. 3B, the cylinder assembly 300 may further comprise a second port 403. Accordingly, the cylinder assembly 300 may be a dual port cylinder. In various embodiments, the second port 403 may comprise an outer diameter 405 configured to fit into an inner diameter 313 of the second liner neck 310. The second port 403 may further comprise a lip 407 and a swage recess 409. The lip 407 may comprise an outer diameter that is greater than the inner diameter 313 of the second liner neck 310. This may enable depth control during swaging the second liner neck 310 to the second port 403. The swage recess 409 may comprise an outer diameter that is less than the inner diameter 313 of the second liner neck 310. This may provide an area to swage the second liner neck 310 to the second port 403. Both the first 401 and second port 403 may be made of steel, stainless steel, aluminum, aluminum alloys, brass, titanium, and the like.

In various embodiments, the respective outer diameters and inner diameters of the ports and liner necks may range from 0.25 inches (6.35 millimeters(mm)) to 0.5 inches (12.7 mm), 0.5 inches (12.7 mm) to 0.75 inches (19.05 mm), 0.75 inches (19.05 mm) to 1 inch (25.4 mm), 1 inch (25.4 mm) to 1.25 inches (31.75 mm), 1.25 inches (31.75 mm) to 1.5 inches (38.1 mm), or 1.5 inches (38.1 mm) to 2.0 inches (50.8 mm).

Referring to FIG. 3C, the composite cylinder assembly 300 is shown in accordance with various embodiments. As shown, the tube liner 302 of the composite cylinder assembly 300 comprises a carbon fiber overwrap 315. It may be advantageous to overwrap a metallic liner with carbon fiber, since the carbon fiber may be the primary strength of the cylinder, increasing the average burst pressure. By way of example, a stainless-steel liner may have a burst pressure of about 9,500 psi (65.5 megapascal (MPa)) at a service pressure of 3,000 psi (20.68 MPa). With a carbon fiber overwrap, the cylinder may reach a 20,000 psi (137.9 MPa) burst pressure.

An additional benefit of incorporating the described carbon fiber overwrap 315 is that it enables the metallic liner 300 to act as a non-load-sharing, gas-impermeable bladder, holding the gas and preventing the gas from permeating and/or oxidizing the assembly. In this case the majority of the strength comes from the carbon fiber overwrap 315. Accordingly, the liner 300 may be a non-load-sharing liner. The strength of a carbon fiber overwrapped non-load-sharing liner may increase the service life of the gas cylinder assembly 300 in operation. Moreover, a carbon fiber overwrapped non-load-sharing composite cylinder may be a lighter weight than an all-metal, or seamless aluminum load-sharing liner composite cylinder configuration. For example, in an aircraft having 175 cylinders, one for each PSU, the weight savings from a carbon fiber overwrapped non-load-sharing liner composite cylinder may enable the addition of one extra passenger, or more cargo, on board. Accordingly, the non-load-sharing liner composite cylinder may benefit in the way of sustainability both in operating life and weight savings.

In various embodiments, the carbon fiber overwrap 315 may further comprise a glass fiber layer 316. The glass fiber layer 316 may be configured to protect a label 317. For example, the glass fiber layer 316 may be configured to protect an orange label indicating a gas cylinder assembly configured for an evacuation slide, or a green label indicating a gas cylinder assembly housing oxygen.

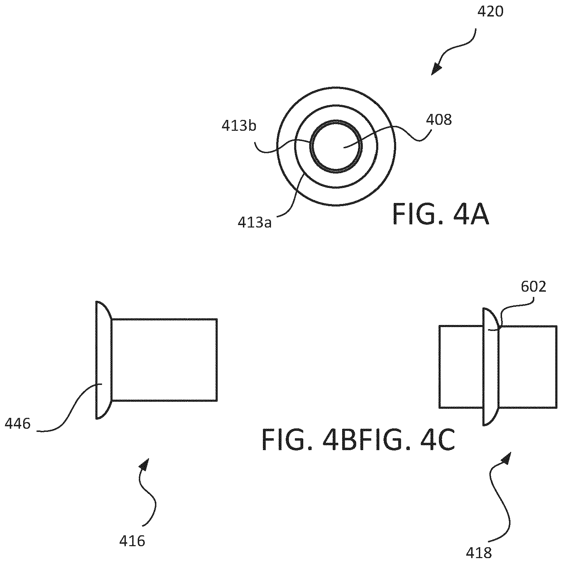

Referring to FIG. 4A, a cross-section view of a port 420 is shown in accordance with various embodiments. As shown, the port 420 may define a channel 408. Surrounding the channel, the port 420 may define at least one ring or a plurality of concentric rings 413a/b. The present disclosure is not limited in this regard. In various embodiments, the channel 408 may be threaded on an inner surface. In various embodiments, the channel 408 may be substantially cylindrical. The channel 408 may be configured to allow one of a gas, liquid, or the like, to pass therethrough. The port 420 may be, for example, the port of FIG. 3B or a mandrel port of FIG. 4B-4C.

Referring to FIGs. 4B-4C, perspective views of mandrel ports are shown in accordance with various embodiments. For example, a mandrel port may be a long mandrel port 416 (FIG. 4B) or a short mandrel port 418 (FIG. 4C).

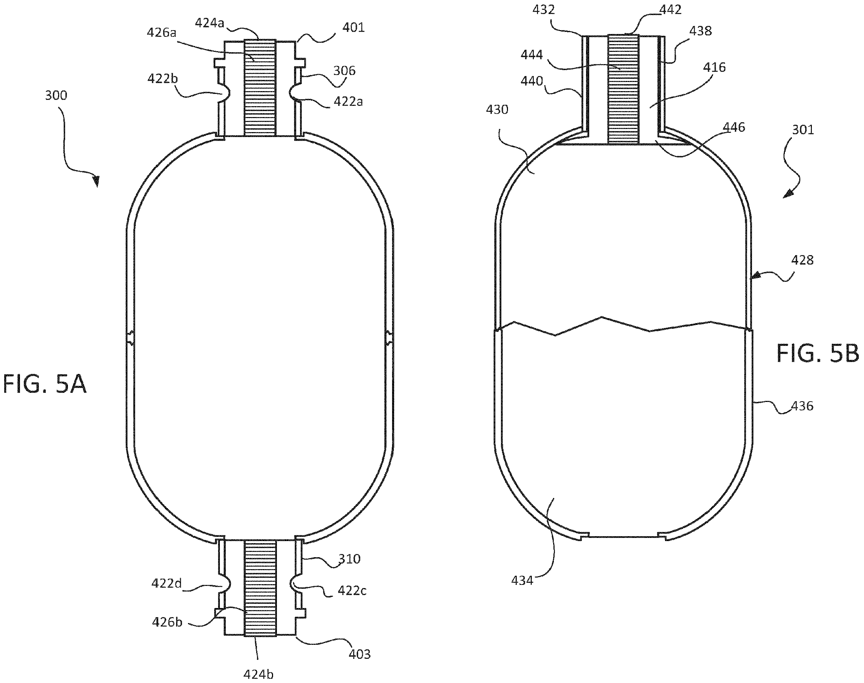

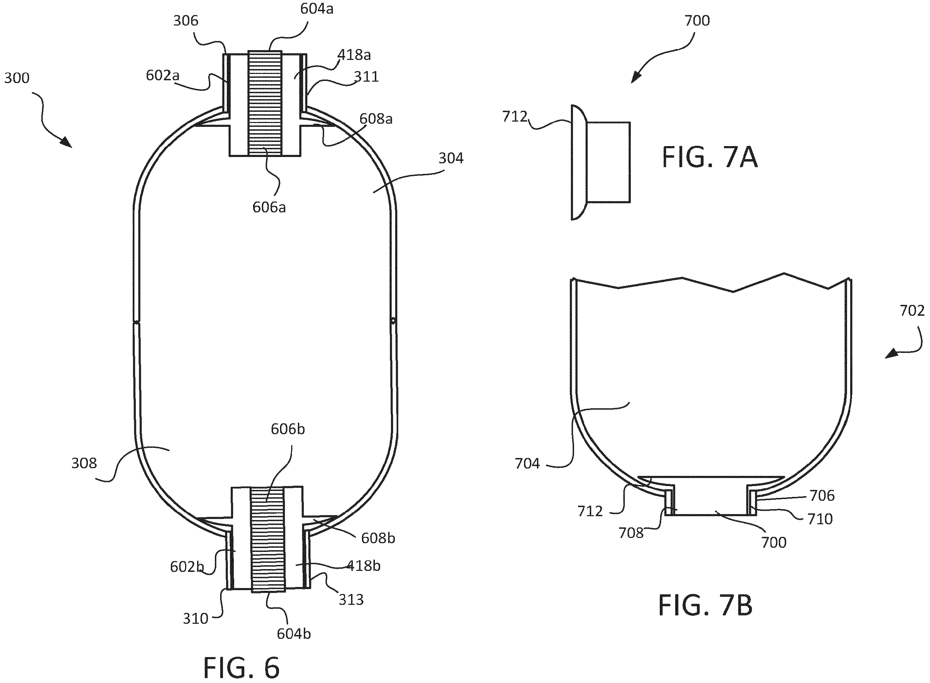

Embodiments of the port 401/403 of FIG. 3B, the long mandrel port 416 (FIG. 4B), and the short mandrel port 418 (FIG. 4C), are further referenced in FIGs. 5A-5B and 6, illustrated as components of composite cylinder assemblies. As shown, the port and mandrel port may be incorporated in single neck and dual neck tube liners. In various embodiments, the port and mandrel port may be incorporated into a single neck tube liner having a domed head portion defining a liner neck and an open bottom portion incorporating a mandrel spindle, discussed in further detail below. The present disclosure is not limited in this regard. FIG. 5A shows a cross-section of the dual neck dual port cylinder assembly 300 of FIGs. 3A and 3B. The ports 401/403 are shown press-fit and swaged with the liner necks 306/310. The liner necks 306/310 may define recesses 422a/b/c/d that correspond to the swage recesses of the ports. Moreover, the port channels 424a/b are threaded therethrough with a plurality of female threads 426a/b, enabling coupling the cylinder assembly 300 to, for example, a conduit that may deliver gaseous oxygen, liquids, and the like.

FIG. 5B shows the long mandrel port 416 of FIG. 4B press-fit into a single neck tube liner cylinder assembly 301. Moreover, in other embodiments, the long mandrel port 416 may be press-fit into a dual neck tube liner cylinder assembly. As shown in FIG. 5B, the cylinder assembly 301 may comprise a tube liner 428. The tube liner 428 may further comprise a domed head portion 430 defining a liner neck 432, a closed bottom portion 434, and a cylindrical wall 436. In various embodiments, the long mandrel port 416 may be configured to press-fit into the liner neck 432. In various embodiments, the long mandrel port 416 may be configured to be welded to the liner neck 432. This may include spin welding the liner neck 432 to the long mandrel port 416. The long mandrel port 416 may comprise an outer diameter 438 configured to fit into an inner diameter 440 of a liner neck 432. This may enable retention of the long mandrel port 416 during pressurization and increase the efficacy of welding the long mandrel port 416 to the liner neck 432. The long mandrel port 416 may define a channel 442. The channel 442 may comprise a plurality of threads 444. The long mandrel port 416 may further comprise a terminal mandrel 446 (also shown in FIG. 4B). In various embodiments, the mandrel 446 may comprise an outer diameter that is greater than the inner diameter 440 of the liner neck 432. The mandrel 446 may correspond to a convex contour of an inner surface of the domed head portion, which may further increase retention efficacy. The mandrel 446 of the long mandrel port 416 may be configured to stop the liner neck 432 at the mandrel 446. Accordingly, the mandrel 446 may control the depth of the fit.

In various embodiments, the long mandrel port 416 may be made of steel, stainless steel, aluminum, brass, titanium, and the like. In various embodiments, the respective outer diameters 438 and inner diameters 440 of the long mandrel port 416 and liner neck 432 may range from 0.25 inches (6.35 millimeters (mm)) to 0.5 inches (12.7 mm), 0.5 inches (12.7 mm) to 0.75 inches (19.05 mm), 0.75 inches (19.05 mm) to 1 inch (25.4 mm), 1 inch (25.4 mm) to 1.25 inches (31.75 mm), 1.25 inches (31.75 mm) to 1.5 inches (38.1 mm), or 1.5 inches (38.1 mm) to 2.0 inches (50.8 mm).

FIG. 6 illustrates the short mandrel port 418 of FIG. 4D press-fit into the dual neck tube liner cylinder assembly 300 of FIG. 3A. Alternatively, in other embodiments, the short mandrel port 418 may be press-fit into a single neck tube liner cylinder assembly, such as that of FIG. 5B. As shown in FIG. 6, two short mandrel ports 418a/418b are incorporated in either neck 306/310. In various embodiments, the short mandrel port 418a/418b may be configured to press-fit into the liner neck 306/310. In various embodiments, the short mandrel port 418a/418b may be configured to be welded to the liner neck 306/310. The short mandrel port 418a/418b may comprise an outer diameter 602a/602b configured to fit into an inner diameter 311/313 of a liner neck 306/310. This may enable retention of the short mandrel port 418a/418b during pressurization and increase the efficacy of welding the short mandrel port 418a/418b to the liner neck 306/310. The short mandrel port 418a/418b may define a channel 604a/604b. The channel 604a/604b may comprise a plurality of threads 606a/606b. The short mandrel port 418a/418b may further comprise a bisecting mandrel 608a/608b. In various embodiments, the mandrel 608a/608b may comprise an outer diameter that is greater than the inner diameter 311/313 of the liner neck 306/310. In various embodiments, the mandrel 608a/608b may correspond to a convex contour of an inner surface of the first domed portion 304 and second domed portion 308.

In various embodiments, the respective outer diameters 602a/602b and inner diameters 311/313 of the short mandrel port 418a/418b and liner neck 306/310 may range from 0.25 inches (6.35 millimeters (mm)) to 0.5 inches (12.7 mm), 0.5 inches (12.7 mm) to 0.75 inches (19.05 mm), 0.75 inches (19.05 mm) to 1 inch (25.4 mm), 1 inch (25.4 mm) to 1.25 inches (31.75 mm), 1.25 inches (31.75 mm) to 1.5 inches (38.1 mm), or 1.5 inches (38.1 mm) to 2.0 inches (50.8 mm).

Referring to FIG. 7A, a perspective view of a mandrel spindle 700 is shown in accordance with various embodiments. The mandrel spindle 700 is further shown in FIG. 7B incorporated within a cylinder assembly tube liner 702. A tube liner 702 may comprise an open bottom portion 704 that defines a spindle neck 706. As shown, the mandrel spindle 700 may be welded into the spindle neck 706 of the open bottom portion 704 of the tube liner 702. The mandrel spindle 700 may comprise an outer diameter 708 configured to fit into the inner diameter 710 of the spindle neck 706. Furthermore, the mandrel spindle 700 may comprise a mandrel 712, which may stop the spindle neck 706 at the mandrel 712. The mandrel 712 may correspond to a convex contour of the open bottom portion 704 to increase the efficacy of the mandrel spindle's fit. The mandrel spindle 700 may be spin welded to the open bottom portion 704, sealing the open bottom portion 704 closed. In various embodiments, the mandrel spindle 700 may be made of steel, stainless steel, aluminum, brass, titanium, and the like.

In various embodiments, the respective outer diameter 708 of the mandrel spindle 700 and inner diameter 710 and spindle neck 706 may range from 0.25 inches (6.35 millimeters (mm)) to 0.5 inches (12.7 mm), 0.5 inches (12.7 mm) to 0.75 inches (19.05 mm), 0.75 inches (19.05 mm) to 1 inch (25.4 mm), 1 inch (25.4 mm) to 1.25 inches (31.75 mm), 1.25 inches (31.75 mm) to 1.5 inches (38.1 mm), or 1.5 inches (38.1 mm) to 2.0 inches (50.8 mm).

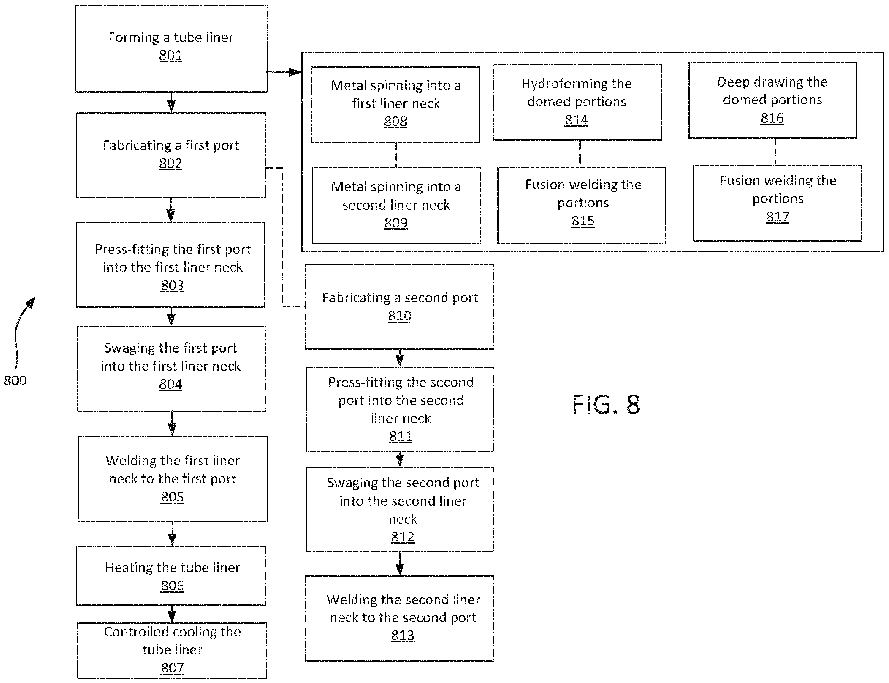

Referring to FIG. 8, a method of manufacturing 800 a composite cylinder assembly is shown in accordance with various embodiments. In various embodiments, the method 800 may comprise forming (step 801) a tube liner. Forming (step 801) may comprise metal spinning (step 808) a tube liner into a first liner neck. Accordingly, the tube liner may comprise a first domed portion defining a first liner neck. The forming (step 801) may further comprise metal spinning (step 809) the tube liner into a second liner neck. Accordingly, the tube liner may further comprise a second domed portion defining a second liner neck. The tube liner may further comprise a cylindrical wall.

The method 800 may further comprise fabricating (step 802) a first port. The first port may comprise an outer diameter configured to fit into an inner diameter of the first liner neck. In various embodiments, the first port may comprise a first lip. The first lip may comprise an outer diameter that is greater than the inner diameter of the first liner neck. In various embodiments, the first port may comprise a first swage recess. The first swage recess may comprise an outer diameter that is less than the inner diameter of the first liner neck.

The method 800 may further comprise press-fitting (step 803) the first port into the first liner neck. The method 800 may further comprise swaging (step 804) the first port to the first liner neck at the first lip. The method 800 may further comprise welding (step 805) the first liner neck to the first port at the first swage recess. The method 800 may further comprise heating the tube liner 806 followed by controlled cooling 807 of the tube liner.

In various embodiments, the method 800 may comprise fabricating (step 810) a second port. The second port may comprise an outer diameter configured to fit into an inner diameter of the second liner neck. In various embodiments, the second port may further comprise a second lip. The second lip may comprise an outer diameter that is greater than the inner diameter of the second liner neck. In various embodiments, the second port may further comprise a second swage recess. The second swage recess may comprise an outer diameter that is less than the inner diameter of the second liner neck. In various embodiments, the method 800 may comprise press-fitting (step 811) the second port into the second liner neck. In various embodiments, the method 800 may comprise swaging (step 812) the second port to the second liner neck at the second lip. In various embodiments, the method 800 may comprise welding (step 813) the second liner neck to the second port at the second swage recess.

In various embodiments, the forming (step 801) may comprise hydroforming (step 814) the domed portions. The forming (step 801) may further comprise fusion welding (step 815) the domed portions to form the cylindrical wall. The cylindrical wall may comprise a fusion weld line along a girth of the cylindrical wall. In various embodiments, the forming (step 801) may comprise deep drawing (step 816) the domed portions. The forming (step 801) may further comprise fusion welding (step 817) the domed portions to form the cylindrical wall. The cylindrical wall may comprise a fusion weld line along a girth of the cylindrical wall.

Benefits, other advantages, and solutions to problems have been described herein with regard to specific embodiments. Furthermore, the connecting lines shown in the various figures contained herein are intended to represent exemplary functional relationships and/or physical couplings between the various elements. It should be noted that many alternative or additional functional relationships or physical connections may be present in a practical system. However, the benefits, advantages, solutions to problems, and any elements that may cause any benefit, advantage, or solution to occur or become more pronounced are not to be construed as critical, required, or essential features or elements of the disclosure. The scope of the disclosure is accordingly to be limited by nothing other than the appended claims, in which reference to an element in the singular is not intended to mean "one and only one" unless explicitly so stated, but rather "one or more." Moreover, where a phrase similar to "at least one of A, B, or C" is used in the claims, it is intended that the phrase be interpreted to mean that A alone may be present in an embodiment, B alone may be present in an embodiment, C alone may be present in an embodiment, or that any combination of the elements A, Band C may be present in a single embodiment; for example, A and B, A and C, B and C, or A and B and C.

Systems, methods and apparatus are provided herein. In the detailed description herein, references to "various embodiments", "one embodiment", "an embodiment", "an example embodiment", etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described. After reading the description, it will be apparent to one skilled in the relevant art(s) how to implement the disclosure in alternative embodiments.

Furthermore, no element, component, or method step in the present disclosure is intended to be dedicated to the public regardless of whether the element, component, or method step is explicitly recited in the claims. As used herein, the terms "comprises", "comprising", or any other variation thereof, are intended to cover a non-exclusive inclusion, such that a process, method, article, or apparatus that comprises a list of elements does not include only those elements but may include other elements not expressly listed or inherent to such process, method, article, or apparatus.

## Claims

1. A composite cylinder assembly (300), comprising:
a tube liner (302), wherein the tube liner comprises:
a first domed portion (304), wherein the first domed portion defines a first liner neck (306);
a second domed portion (308), wherein the second domed portion defines a second liner neck (310); and
a cylindrical wall (312) coupled to the first domed portion (304) and the second domed portion (308), wherein the cylindrical wall is between the first domed portion and the second domed portion;
and
a first port (401), wherein the first port comprises an outer diameter (402) configured to fit into an inner diameter (311) of the first liner neck (306), wherein the first port further comprises:
a first lip (404), wherein the first lip comprises an outer diameter that is greater than the inner diameter of the first liner neck; and
a first swage recess (406), wherein the first swage recess comprises an outer diameter that is less than the inner diameter of the first liner neck,
wherein the first port (401) is configured to press-fit into the first liner neck (306), wherein the lip is configured to provide a surface area to weld the first port to the first liner neck, wherein the swage recess is configured to provide an area to swage the first liner neck to the first port.

2. The composite cylinder assembly of claim 1, further comprising:
a second port (403), wherein the second port comprises an outer diameter (405) configured to fit into an inner diameter of the second liner neck, wherein the second port further comprises:
a second lip (407), wherein the second lip comprises an outer diameter that is greater than the inner diameter of the second liner neck;
a second swage recess (409), wherein the second swage recess comprises an outer diameter that is less than the inner diameter of the second liner neck;
wherein the second port (403) is configured to press-fit into the second liner neck, wherein the second lip is configured to provide a surface area to weld the second port to the second liner neck, wherein the second swage recess is configured to provide an area to swage the second liner neck to the second port.

3. The composite cylinder assembly of claim 1 or 2, wherein the tube liner (302) comprises a carbon fiber overwrap, wherein the carbon fiber overwrap further comprises a glass fiber layer.

4. The composite cylinder assembly of any preceding claim, wherein the tube liner (302) is made of metal.

5. The composite cylinder assembly of any preceding claim, wherein the cylindrical wall (312) of the tube liner is seamed.

6. The composite cylinder assembly of any preceding claim, wherein the tube liner (302) is spin welded.

7. The composite cylinder assembly of claim 2, wherein each port defines a channel, and preferably wherein the channel is substantially cylindrical, wherein the channel is threaded.

8. The composite cylinder assembly of claim 2, wherein each liner neck is stoppered at the port lip; or wherein each liner neck is spin welded to the port lip; or
wherein each liner neck is fusion welded to the port lip.

9. A composite cylinder assembly, comprising:
a tube liner (302), wherein the tube liner (302) comprises:
a domed head portion, wherein the domed head portion defines a liner neck;
an open bottom portion; and
a cylindrical wall (312) coupled to the domed head portion and the open bottom portion, wherein the cylindrical wall is between the domed head portion and the open bottom portion;
and
a mandrel port (416, 418), wherein the mandrel port comprises an outer diameter configured to fit into an inner diameter of the liner neck, wherein the mandrel port defines a channel, wherein the mandrel port further comprises a mandrel, wherein the mandrel comprises an outer diameter that is greater than the inner diameter of the liner neck, wherein the mandrel port is configured to press-fit into the liner neck, wherein the mandrel port is configured to be welded to the liner neck.

10. The composite cylinder assembly of claim 9, wherein the tube liner (302) further comprises a mandrel spindle, wherein the mandrel spindle is welded to the open bottom portion, wherein the mandrel spindle is configured to seal the open bottom portion.

11. The composite cylinder assembly of claim 9 or 10, wherein the mandrel port (418) is a short mandrel port comprising a bisecting mandrel; or
wherein the mandrel port (416) is a long mandrel port comprising a terminal mandrel.

12. The composite cylinder assembly of any of claims 9-11, wherein the mandrel corresponds to a convex contour of an inner surface of the domed head portion.

13. A method of manufacturing a composite cylinder assembly, comprising:
forming a tube liner, wherein the tube liner comprises:
a first domed portion, wherein the first domed portion defines a first liner neck;
a second domed portion, wherein the second domed portion defines a second liner neck; and
a cylindrical wall coupled to the first domed portion and the second domed portion, wherein the cylindrical wall is between the first domed portion and the second domed portion;
fabricating a first port, wherein the first port comprises an outer diameter configured to fit into an inner diameter of the first liner neck, wherein the first port comprises:
a first lip, wherein the first lip comprises an outer diameter that is greater than the inner diameter of the first liner neck; and
a first swage recess, wherein the first swage recess comprises an outer diameter that is less than the inner diameter of the first liner neck;
press-fitting the first port into the first liner neck;
swaging the first liner neck to the first port at the first swage recess; and
welding the first port to the first liner neck at the first lip.

14. The method of claim 13, further comprising:
fabricating a second port, wherein the second port comprises an outer diameter configured to fit into an inner diameter of the second liner neck, wherein the second port comprises:
a second lip, wherein the second lip comprises an outer diameter that is greater than the inner diameter of the second liner neck; and
a second swage recess, wherein the second swage recess comprises an outer diameter that is less than the inner diameter of the second liner neck;
press-fitting the second port into the second liner neck;
swaging the second liner neck to the second port at the second swage recess; and
welding the second port to the second liner neck at the second lip.

15. The method of claim 13 or 14, wherein the forming comprises metal spinning the tube liner; or
wherein the forming comprises deep drawing the first domed portion and the second domed portion, wherein the forming further comprises fusion welding the first domed portion to the second domed portion to form the cylindrical wall, wherein the cylindrical wall comprises a fusion weld line along a girth of the cylindrical wall.
